# EUROPÄISCHE PATENTSCHRIFT

(11) **EP 0 524 481 B1**
(45) Veröffentlichungstag und Bekanntmachung des Hinweises auf die Patenterteilung: **10.05.1995**
(21) Anmeldenummer: 92111514.3
(22) Anmeldetag: 07.07.1992
(51) Int. Cl.: C03C 17/25, C03C 17/00

(54) **Verfahren zum Vergüten von Hohlglaskörpern**
Process for the surface treatment of hollow glass articles
Procédé pour le traitement de surface d'articles creux en verre

(30) Priorität: 20.07.1991 DE 4124136
(43) Veröffentlichungstag der Anmeldung: 27.01.1993
(73) Patentinhaber: Th. Goldschmidt AG, 45127 Essen (DE)
(72) Erfinder: Giersberg, Joachim, W-4370 Marl-Sinsen (DE); Gomm, Hartmut, W-4330 Mülheim 13 (DE); Naumann, Dirk, Dr., W-4300 Essen-Kupferdreh (DE)

(56) Entgegenhaltungen:
- FR-A- 1 036 647
- GB-A- 2 024 189
- GB-A- 2 093 442
- CHEMICAL ABSTRACTS, vol. 103, no. 20, November 1985, Columbus, Ohio, US;abstract no. 165125c, Seite 298 ;

## Beschreibung

Die Erfindung betrifft ein Verfahren zum Vergüten von Hohlglaskörpern durch Aufsprühen einer Lösung von Zinnverbindungen in Wasser, Alkohol oder Wasser/Alkohol-Mischungen auf die 500 bis 600°C heiße äußere Oberfläche von Hohlglaskörpern. Die Erfindung betrifft ferner Mittel zur Durchführung dieses Verfahrens.

Es ist im Prinzip bekannt, daß man dünne Zinnoxidschichten auf Glasoberflächen dadurch aufbringen kann, daß man das erhitzte Glas einer verdampften Zinnverbindung aussetzt. Die Zinnverbindung kann als Dampf oder als feiner Spray, der eine gelöste Zinnverbindung enthält, aufgebracht werden.

So ist aus der US-PS 3 414 429 ein Verfahren zum Aufbringen von Metalloxidschichten auf Glasbehälter bekannt, bei dem man als Zinnverbindungen Zinn(IV)-halogenide, wie zum Beispiel Zinntetrachlorid, verwendet. Diese Verbindungen hydrolysieren aber leicht in Gegenwart von Feuchtigkeitsspuren, wobei stark korrodierende Verbindungen entstehen. Da nur ein kleiner Teil der in die Beschichtungskammer eingebrachten Zinnhalogenide tatsächlich auf der Glasoberfläche niedergeschlagen wird und der nicht verbrauchte Anteil der Zinnhalogenide nicht ohne größeren Aufwand zurückgeführt werden kann, eignen sich die Zinnhalogenide für den Einsatz zur Glasvergütung nur bedingt. Da Zinntetrachlorid bei der Anwendung meist mit zusätzlichem Chlorwasserstoff stabilisiert wird, fallen je Zinnatom mindestens vier Chloratome an, die in Form der Chloride das Abwasser belasten. Überdies zeigt sich, daß wegen der spontanen Zersetzung des Zinntetrachlorids ein ungleichmäßiger Aufbau der Zinnoxidschicht erfolgen kann, wobei optisch störende Interferenzen auftreten können.

Verwendet man statt des Zinntetrachlorids Zinndichlorid, verringert man theoretisch die Menge des zu entsorgenden Chlorids. Man muß jedoch wegen der hydrolytischen Instabilität der wäßrigen Lösungen des Zinndichlorids diesen Lösungen wieder Chlorwasserstoff zusetzen, wodurch die Chlormenge wieder über den Wert von 1 Sn : 2 Cl steigt. Es bleibt zusätzlich das Problem erhöhter Korrosion der apparativen Teile durch die salzsaure Zinndichloridlösung.

Ferner ist aus der DE-PS 25 41 710 ein Verfahren zum Aufbringen einer Zinn(IV)-oxid-Schicht auf einen Glasbehälter durch Pyrolyse einer verdampften oder feinzerteilten flüssigen Zinnverbindung auf der eine Temperatur zwischen 450 und 600°C aufweisenden Glasoberfläche bekannt, bei dem als Zinnverbindung ein Monoorganozinntrichlorid der allgemeinen Formel RSnCl₃ verwendet wird, worin R für ein Alkylradikal mit 1 bis 8 Kohlenstoffatomen steht. Dabei wird als Monoalkylzinntrichlorid vorzugsweise Butylzinntrichlorid verwendet. Organozinnverbindungen sind jedoch toxische, kennzeichnungspflichtige Produkte, deren Verwendung besonderer Sorgfalt bedarf. Dabei ist im Hinblick auf die Schadstoffemission nachteilig, daß je Zinnatom drei Chloratome frei werden und entsorgt werden müssen.

Die mit einer Zinn(IV)-oxid-Schicht versehenen (heißendvergüteten) Glasbehälter können anschließend noch mit einem dünnen Film aus Naturwachs oder einem synthetischen Polymer versehen werden (Kaltendvergütung). Ein solcher Belag ist üblicherweise durchsichtig und macht den Glasbehälter gegenüber Kratzen und Abrieb noch beständiger, auch wenn dieser mit alkalischen Reinigungsmitteln in Berührung kommt.

Die vorliegende Erfindung befaßt sich mit diesem technischen Problem der Beschichtung der äußeren Oberfläche von Hohlglaskörpern, wobei ein besonderer Aspekt der vorliegenden Erfindung darin liegt, Lösungen von Zinnverbindungen bereitzustellen, die leicht zugänglich, lagerstabil und nicht oder nur in geringem Maße toxisch sind. Dabei wird bei der thermischen Zersetzung dieser Verbindungen auf heißen Glasoberflächen die Bildung gleichmäßiger Zinnoxidschichten, auf denen die Kaltendvergütungsmittel (Wachse, Polyolefine oder dgl.) gut haften, angestrebt.

Ein Gegenstand der vorliegenden Erfindung, mit dem das vorstehend dargestellte technische Problem gelöst werden soll, ist deshalb ein Verfahren zum Vergüten von Hohlglaskörpern durch Aufsprühen einer Lösung von Zinnverbindungen in Wasser, Alkohol oder Wasser/Alkohol-Mischungen auf die 500 bis 600°C heiße äußere Oberfläche von Hohlglaskörpern, mit dem Kennzeichen, daß man eine Lösung aufsprüht, welche 100 bis 1000 g/l (OH)₂SnCl₂ enthält.

Wäßrige Lösungen von (OH)₂SnCl₂ lassen sich leicht in hohen Konzentrationen durch vorzugsweise elektrolytische Oxidation wäßriger Lösungen von Zinn(II)-chlorid herstellen. Die Lösungen sind hydrolysestabil. Es bilden sich auch bei längerem Stehen keine Niederschläge. Eingedickte, hochkonzentrierte Lösungen lassen sich ohne weiteres wieder auf Gebrauchskonzentration verdünnen. Das Verhältnis Sn : Cl beträgt 1 : 2, so daß die Abwasser- bzw. Emissionsprobleme relativ niedrig gehalten werden können.

Bei dem erfindungsgemäßen Verfahren werden auf den Glasoberflächen gleichmäßige Zinnoxidschichten einer Schichtdicke bis zu etwa 100 nm erhalten. Bei einer anschließenden Kaltendvergütung zeigt sich, daß die hierbei aufgebrachten Wachs- oder Polyolefinschichten gut haften und einer größeren Anzahl von Waschcyclen widerstehen, als dies nach dem bisherigen Stand der Technik möglich war.

Eine weitere Ausgestaltung des erfindungsgemäßen Verfahrens besteht darin, daß man eine Lösung aufsprüht, welche zusätzlich 0,01 bis 0,5 Mol Oxalsäure je Mol (OH)₂SnCl₂ enthält. Durch den Zusatz der Oxalsäure wird die Ausbildung besonders gleichmäßiger Zinnoxidschichten noch weiter gefördert und die Haftung der Schichten auf dem Untergrund noch verbessert.

Dabei ist es von besonderem Vorteil, wenn man eine Lösung aufsprüht, bei der bis zu 50 Mol-% der Verbindung (OH)₂SnCl₂ durch äquimolare Mengen der Verbindung der allgemeinen Formel (HO)ₓSn(C₂O₄)_{y}, in der x einen Wert von 0,2 bis 3,8, y einen Wert von 1,9 bis 0,1 hat und (2y+x) = 4 ist, ersetzt sind. Bei dieser besonders bevorzugten Ausgestaltung des erfindungsgemäßen Verfahrens gelingt es, unter Erzielung von Zinnoxidschichten optimaler Eigenschaften, die Menge an zu entsorgendem Chlorid noch weiter zu senken, ohne Nachteile, wie verringerte Hydrolysestabilität der Lösung, in Kauf nehmen zu müssen. Auch die Lösungen von (HO)ₓSn(C₂O₄)_{y} zeigen ihrerseits hydrolytische Stabilität und können ebenfalls auf elektrolytischem Wege in hoher Konzentration hergestellt werden.

Besonders vorteilhaft haben sich zur Durchführung des erfindungsgemäßen Verfahrens Lösungen erwiesen, bei denen das Sn : Cl-Verhältnis zumindest angenähert gleich 1 ist.

Ein weiterer Gegenstand der Erfindung sind die Mittel zur Durchführung des erfindungsgemäßen Verfahrens. Dabei ist ein solches Mittel dadurch gekennzeichnet, daß es aus einer Lösung besteht, welche die Verbindung (OH)₂SnCl₂ in einer solchen Menge enthält, daß der Gehalt an Sn in der Lösung 0,45 bis 4,5 Mol/l beträgt. Dies entspricht einer Konzentration von 100 bis 1000 g/l (OH)₂SnCl₂. Dabei können, wie oben ausgeführt, bis zu 50 Mol-% der Verbindung (OH)₂SnCl₂ durch äquimolare Mengen der Verbindung der allgemeinen Formel (HO)ₓSn(C₂O₄)_{y}, in der x einen Wert von 0,2 bis 3,8, y einen Wert von 1,9 bis 0,1 hat und (2y+x) = 4 ist, ersetzt sein, wobei vorzugsweise das Verhältnis von Sn : Cl zumindest angenähert gleich 1 ist. Der Lösung kann ferner Oxalsäure in einer solchen Menge zugegeben werden, daß die Lösung zusätzlich 0,01 bis 0,5 Mol Oxalsäure je Mol (OH)₂SnCl₂ enthält. Der Zusatz von Oxalsäure ist insbesondere dann zu empfehlen, wenn der Index y in der Verbindung (HO)ₓSn(C₂O₄)_{y} im unteren Bereich von 0,1 bis etwa 0,5 liegt.

Bevorzugtes Lösungsmittel ist Wasser. Es können jedoch auch Mischungen von Wasser und Alkoholen, insbesondere niederen aliphatischen Alkoholen, wie Ethanol, und gegebenenfalls Ethanol alleine als Lösungsmittel eingesetzt werden.

Beispiele erfindungsgemäßer Mittel sind Lösungen folgender Zusammensetzung:

| Lösung | (OH)₂SnCl₂ g/l | Oxalsäure g/l | (HO)ₓSn(C₂O₄)_{y} | | |
|---|---|---|---|---|---|
| | | | x = | y = | g/l |
| 1 | 450 | - | - | - | - |
| 2 | 645 | - | - | - | - |
| 3 | 323 | 50 | - | - | - |
| 4 | 215 | - | 2 | 1 | 170 |
| 5 | 323 | - | 2 | 1 | 170 |
| 6 | 226 | 100 | 2 | 1 | 167 |
| 7 | 226 | - | 2 | 1 | 167 |

Das erfindungsgemäße Verfahren soll durch die folgenden Beispiele weiter erläutert werden. Dabei wird zunächst die Beschichtung der äußeren Oberfläche von Flaschen gezeigt und die erhaltenen Beschichtungen auf Schichtdicke und Gleichmäßigkeit untersucht. Anschließend werden die beschichteten Flaschen kaltendvergütet, und es wird die Waschbeständigkeit der Kaltendbeschichtungen bestimmt.

### Verfahrensbeschreibung

Nicht beschichtete 250-ml-Weißglasflaschen werden in einem Muffelofen auf 560°C erwärmt. Nach Entnahme der Flasche aus dem Temperierofen wird diese aus ca. 55 cm Entfernung mit der Versuchslösung besprüht. Die Flasche wird hierbei am Flaschenhals gehalten und führt eine Rotationsbewegung von 60 U/Min. aus.

Die Sprühdauer beträgt ca. 4 Sek. Die applizierte Vergütungsmittelmenge beträgt jeweils 4 ml. Die zu applizierende Lösung wird mit einer Sprühpistole (Preßluft = 3,5 bar) versprüht.

Nach der Beschichtung werden die Flaschen sofort in den 560°C warmen Muffelofen zurückgestellt und innerhalb von 12 Std. kontinuierlich auf Normaltemperatur abgekühlt.

### Bestimmung der Schichtdicken

Die Bestimmung der Zinn(IV)-oxid-Auflagen erfolgt mit einem HOT END COATING METER der Firma AGR. Bei diesem Meßverfahren handelt es sich um eine Infrarotreflektionsmessung. Die Messung wird vom Flaschenboden aus in 1, 1,5, 2 und 3 Zoll Höhe durchgeführt. Das Meßgerät tastet in jeder Höhe den gesamten Flaschenumfang ab und führt pro Grad eine Messung durch (360 Messungen/Umfang).

### Kaltendvergütung

Zur Bestimmung der Haftung von Kaltendvergütungsmitteln werden die vergüteten Flaschen mit einer 1 : 40 verdünnten Lösung eines Kaltendvergütungsmittels auf Basis einer Polyethylenwachsemulsion (im Handel erhältlich unter der Bezeichnung TEGOGLAS-RP-40) besprüht. Hierzu werden die Flaschen auf 120°C erwärmt und auf einen sich mit 30 U/Min. drehenden Teller gesetzt. Mittels einer Sprühpistole (3,5 bar) werden 2 ml der Kaltendvergütungslösung appliziert.

### Bestimmung der Kratzfestigkeit

Zwei identische, vergütete Glasflaschen werden 90° versetzt zueinander in einer Halterung befestigt und mit einem Druck von 5,5 bar auf einer Reibstrecke von 10 cm gegeneinander gerieben. Die Anzahl der Hübe bis zur akustischen und optischen Wahrnehmung von Kratzgeräuschen bzw. Kratzern ist ein Maß für den Kratzschutz der Kaltendvergütungslösung.

Die zu testenden Flaschen werden sowohl im trockenen als auch im feuchten Zustand auf ihre Kratzfestigkeit geprüft.

### Waschlaugenstabilität

Die Beständigkeit der Beschichtungen wird in einem für diese Zwecke modifizierten Waschautomaten (Miele-Desinfektor G 7736) durchgeführt. Hierzu werden die Flaschen 10 Min. mit 2 %iger Natronlauge bei 85°C gespült.

### Heißendvergütung

| Lösung | Schichtdicken/CTU¹ Meßzone/Zoll | | | |
|---|---|---|---|---|
| | 1 | 1,5 | 2 | 3 |
| 1 | 57 | 62 | 61 | 48 |
| 2 | 83 | 87 | 90 | 77 |
| 3 | 27 | 25 | 26 | 20 |
| 4 | 47 | 40 | 46 | 37 |
| 5 | 57 | 53 | 54 | 48 |
| 6 | 30 | 33 | 31 | 26 |
| 7 | 41 | 50 | 41 | 33 |

| | | | | |
|---|---|---|---|---|
| ¹ = 1 CTU = 0,3 nm | | | | |

### Kaltendvergütung

Die mit den Versuchslösungen 1 bis 7 beschichteten Flaschen weisen eine ausgezeichnete Primerwirkung für das Kaltendvergütungsmittel auf. Die Kaltendvergütung weist eine Kratzfestigkeit von > 10 Hüben auf. Auch nach zwei Waschcyclen in der Natronlaugewäsche wird keine verminderte Kratzfestigkeit festgestellt.

## Patentansprüche

1. Verfahren zum Vergüten von Hohlglaskörpern durch Aufsprühen einer Lösung von Zinnverbindungen in Wasser, Alkohol oder Wasser/Alkohol-Mischungen auf die 500 bis 600°C heiße äußere Oberfläche von Hohlglaskörpern, dadurch gekennzeichnet, daß man eine Lösung aufsprüht, welche 100 bis 1000 g/l (OH)₂SnCl₂ enthält.

2. Verfahren nach Anspruch 1, dadurch gekennzeichnet, daß man eine Lösung aufsprüht, welche zusätzlich 0,01 bis 0,5 Mol Oxalsäure je Mol (OH)₂SnCl₂ enthält.

3. Verfahren nach Anspruch 1 oder 2, dadurch gekennzeichnet, daß man eine Lösung aufsprüht, bei der bis zu 50 Mol-% der Verbindung (OH)₂SnCl₂ durch äquimolare Mengen der Verbindung der allgemeinen Formel (HO)ₓSn(C₂O₄)_{y}, in der x einen Wert von 0,2 bis 3,8, y einen Wert von 1,9 bis 0,1 hat und (2y+x) = 4 ist, ersetzt sind.

4. Verfahren nach einem oder mehreren der vorhergehenden Ansprüche, dadurch gekennzeichnet, daß man eine Lösung aufsprüht, bei der das Verhältnis Sn : Cl zumindest angenähert gleich 1 ist.

5. Mittel zur Durchführung des Verfahrens nach einem oder mehreren der vorhergehenden Ansprüche, dadurch gekennzeichnet, daß es aus einer wäßrigen, alkoholischen oder wäßrig/alkoholischen Lösung besteht, welche die Verbindung (OH)₂SnCl₂ in einer solchen Menge enthält, daß der Gehalt an Sn in der Lösung C,45 bis 4,5 Mol/l beträgt.

6. Mittel nach Anspruch 5, dadurch abgewandelt, daß bis zu 50 Mol-% der Verbindung (OH)₂SnCl₂ durch die Verbindung (HO)ₓSn(C₂O₄)_{y} ersetzt sind.

7. Mittel nach Anspruch 5 oder 6, dadurch gekennzeichnet, daß das Verhältnis von Sn : Cl zumindest angenähert gleich 1 ist.

8. Mittel nach einem oder mehreren der Ansprüche 5 bis 7, dadurch gekennzeichnet, daß es zusätzlich 0,01 bis 0,5 Mol Oxalsäure je Mol (OH)₂SnCl₂ enthält.

## Claims

1. Process for coating hollow glass articles by spraying a solution of tin compounds in water, alcohol or water/alcohol mixtures onto the outer surface of hollow glass articles with is at a high temperature of from 500 to 600°C, characterized in that the solution contains from 100 to 1000 g/l of (OH)₂SnCl₂.

2. Process according to Claim 1, characterized in that the solution additionally contains from 0.01 to 0.5 mol of oxalic acid per mol of (OH)₂SnCl₂.

3. Process according to Claim 1 or 2, characterized in that in the solution up to 50 mol% of the compound (OH)₂SnCl₂ have been replaced by equimolar amounts of the compound of the general formula (HO)ₓSn(C₂O₄)_{y}, in which x has a value of from 0.2 to 3.8, y has a value of from 1.9 to 0.1 and (2y+x) = 4.

4. Process according to one or more of the preceding claims, characterized in that in the solution the Sn:Cl ratio is at least approximately equal to 1.

5. Composition for carrying out the process according to one or more of the preceding claims, characterized in that it comprises an aqueous, alcoholic or aqueous/alcoholic solution containing the compound (OH)₂SnCl₂ in such an amount that the Sn content in the solution is from 0.45 to 4.5 mol/l.

6. Composition according to Claim 5, modified by the fact that up to 50 mol% of the compound (OH)₂SnCl₂ have been replaced by the compound (HO)ₓSn(C₂O₄)_{y}.

7. Composition according to Claim 5 or 6, characterized in that the Sn:Cl ratio is at least approximately equal to 1.

8. Composition according to one or more of Claims 5 to 7, characterized in that it additionally contains from 0.01 to 0.5 mol of oxalic acid per mol of (OH)₂SnCl₂.

## Revendications

1. Procédé de traitement superficiel d'articles creux en verre par pulvérisation d'une solution de composés de l'étain dans de l'eau, un alcool ou des mélanges d'eau et d'alcool, sur la surface extérieure, chauffée à 500 à 600°C, d'articles creux en verre, caractérisé en ce qu'on pulvérise une solution qui contient 100 à 1 000 g/l de (OH)₂SnCl₂.

2. Procédé selon la revendication 1, caractérisé en ce qu'on pulvérise une solution qui contient, en outre, 0,01 à 0,5 mole d'acide oxalique par mole de (OH)₂SnCl₂.

3. Procédé selon la revendication 1 ou 2, caractérisé en ce qu'on pulvérise une solution dans laquelle jusqu'à 50 % en moles du composé (OH)₂SnCl₂ sont remplacés par des quantités équimolaires du composé répondant à la formule générale (HO)ₓSn(C₂O₄)_{y} dans laquelle x vaut de 0,2 à 3,8, y vaut de 1,9 à 0,1, et (2y+x) = 4.

4. Procédé selon l'une ou plusieurs des revendications précédentes, caractérisé en ce qu'on pulvérise une solution dans laquelle le rapport de Sn : Cl est au moins presque égal à 1.

5. Agent pour la mise en oeuvre du procédé selon l'une ou plusieurs des revendications précédentes, caractérisé en ce qu'il est formé d'une solution aqueuse, alcoolique ou aqueuse/alcoolique, qui contient le composé (OH)₂SnCl₂ en une quantité telle que la teneur en Sn dans la solution est de 0,45 à 4,5 mole/l.

6. Agent selon la revendication 5, modifié par le fait que jusqu'à 50 % en moles du composé (OH)₂SnCl₂ sont remplacés par le composé (HO)ₓSn(C₂O₄)_{y}.

7. Agent selon la revendication 5 ou 6, caractérisé en ce que le rapport de Sn : Cl est au moins presque égal à 1.

8. Agent selon l'une ou plusieurs des revendications 5 à 7, caractérisé en ce qu'il contient, en outre, 0,01 à 0,5 mole d'acide oxalique par mole de (OH)₂SnCl₂.
